# EUROPEAN PATENT SPECIFICATION

(11) **EP 3 743 627 B1**
(45) Date of publication and mention of the grant of the patent: **18.10.2023**
(21) Application number: 19702125.6
(22) Date of filing: 18.01.2019
(51) Int. Cl.: F16B 2/06, F16B 2/12, F16B 7/04, F16B 7/18, F16L 3/237, F16L 3/24, H02G 3/32

(54) **IMPROVED CLAMP FOR MOUNTING CABLES TO A SUPPORTING ELEMENT**
VERBESSERTE KLEMME ZUM BEFESTIGEN VON KABELN AN EINEM TRAGELEMENT
PINCE AMÉLIORÉE POUR MONTER DES CÂBLES SUR UN ÉLÉMENT DE SUPPORT

(30) Priority: 24.01.2018 IT 201800001751
(43) Date of publication of application: 02.12.2020
(73) Proprietor: Fi.Mo.Tec. S.p.A., 20122 Milano (IT)
(72) Inventor: VARALE, Alberto, 20093 Cologno Monzese (MI) (IT); PISCOPO, Michelangelo, 20010 Vanzago (MI) (IT)
(74) Representative: Franco Martegani S.r.l.
(86) International application number: PCT/IB2019/050418
(87) International publication number: WO 2019/145830

(56) References cited:
- WO-A1-2017/060199
- WO-A1-2017/199083
- DE-A1-102004 028 707
- US-A- 2 711 300
- US-A1- 2012 096 691
- US-A1- 2015 238 377
- US-B1- 6 601 813

## Description

The present invention relates to an improved clamp for mounting cables, for example coaxial cables, optical-fiber cables or power cables, to a supporting element, for example a segment of a pylon.

For this purpose, clamps consisting of a metal jumper having a C-shaped cross-section with two opposed wings rigidly interlocked by a core are known.

The seats of the cables, commonly called saddles, are bolted externally to one of the two wings, or to the core of the "C", whereas the clamp is bolted to the supporting element which is positioned between the wings of the clamp itself.

The document US 6,601,813 discloses a holder that includes a clamp, coupling arm, and receptacle. The clamp includes a fixed jaw 112, a lower member 114, and movable jaw 116 disposed therebetween. A side member 118 rigidly connects fixed jaw 112 and lower member 114. A bolt 122 extends through a bore 132 to adjust the position of movable jaw 116.

An example of said saddles and clamps is described in the document WO2017/060199.

As the supporting element can have different sizes and shapes, a thrust plate (jaw) is provided between the wings of the clamp, movable by means of the screw of the fixing bolt, which is suitable for clamping the supporting element, for example a metal bar with a circular section, between itself and the opposite wing.

Metal clamps of the type briefly described above have a satisfactory functioning: they are not able, however, to guarantee a secure grip on the supporting element, especially against a lateral disengagement, i.e. from the open side of the "C" of the clamp, with respect to the supporting element itself, in particular when the supporting element is a bar with a circular section.

The general objective of the present invention is to overcome the drawbacks of the known art by providing a clamp for mounting cables to a supporting element provided with means capable of preventing the lateral disengagement of said clamp from the supporting element itself.

A further objective of the invention is to provide a clamp for mounting cables to a supporting element, which is sturdy and durable.

Another objective of the invention is to provide a clamp which is very simple and economical to produce, light, and not subject to rapid wear due to atmospheric agents.

Yet another objective of the invention is to provide a clamp which can be easily disassembled from the supporting element even after a certain period of time.

The above objectives are achieved by a clamp having the characteristics set out in the enclosed claim 1. Preferred embodiments are defined by the dependent claims.

The structural and functional characteristics of the present invention and its advantages with respect to the known art will be even more apparent from an examination of the following description, referring to the attached drawings, which illustrate examples of possible embodiments of the clamp itself. In the drawings:
- Figures 1 and 2 are two perspective views illustrating a first embodiment of a clamp;
- Figures 3 and 4 are two perspective views, similar to Figures 1 and 2, but showing a second embodiment of the clamp;
- Figures 5 and 6 are two perspective views similar to Figures 1 and 2, but showing a third embodiment of the clamp;
- Figures 7 and 8 are two perspective views similar to Figures 3 and 4, but showing a fourth embodiment of the clamp;
- Figures 9 and 10 are two perspective views similar to Figures 1 and 2, but showing a fifth embodiment of the clamp;
- Figures 11a and 11b are a perspective view illustrating the clamp mounted on site;
- Figure 12 is a vertical section of the perspective view of Figure 11a;
   Figure 13 is a partially sectional raised side view of the clamp of Figures 5 and 6 tightened on a supporting bar;
- Figure 14 is a raised side view of the clamp of Figures 7 and 8 tightened on a supporting bar;
- Figure 15 is a raised side view of the clamp of Figure 14 tightened on a tubular supporting bar having a smaller diameter; - Figures 16 and 17 are two views illustrating the behaviour of the clamp when subjected to forces which tend to disengage it from the supporting bar.

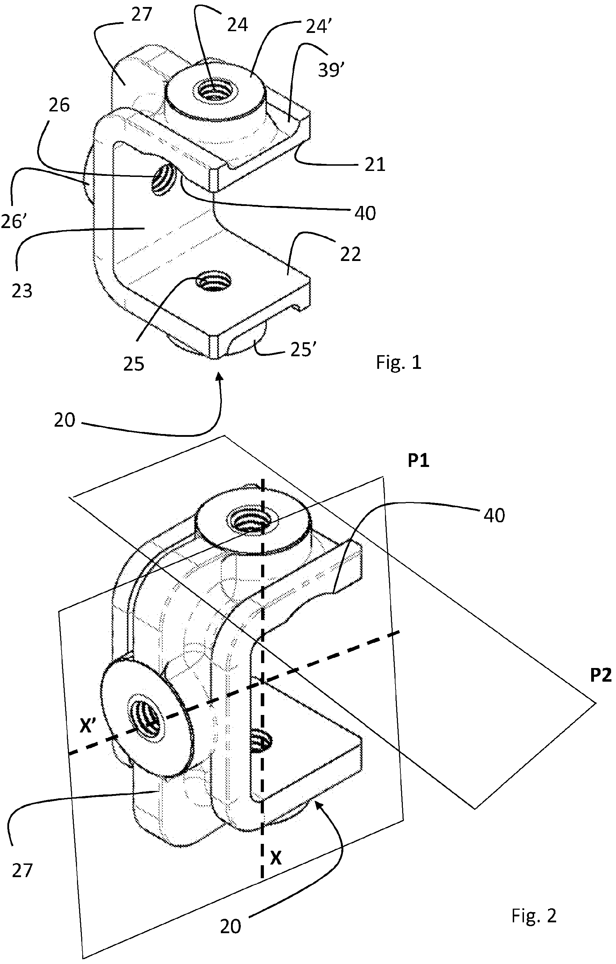

With reference first of all to figures 1 and 2 of the drawings, a clamp according to a first embodiment, is generally indicated with 20 and is structurally composed of a jumper having a "C" section, with two opposed wings 21, 22 interlocked by a core 23.

The wings 21, 22 and the core 23 are provided with respective threaded pass-through holes 24, 25 and 26 which are, preferably, surrounded by respective collars 24', 25', 26'.

The axes X, X' of said collars and pass-through holes 24, 25 and 26 lie on the same median plane P1 of the clamp and are interconnected by an external reinforcement rib 27.

The rib 27 also lies on said median plane P1 of the clamp 20.

The axes X of the holes 24 and 25 on the wings 21 and 22 and the axis X' of the hole 26 on the core 23 are perpendicular to each other.

In particular, as shown in the figures, each of said threaded pass-through holes 24, 25 and 26 is formed within respective collars 24', 25', 26' produced in one piece with said wings 21, 22 and said core 23 and externally with respect to the same, said collars 24', 25', 26' being rigidly interconnected by said rib 27.

Said collars 24', 25', 26' and said rib 27 give the clamp the strength necessary for supporting induced loads.

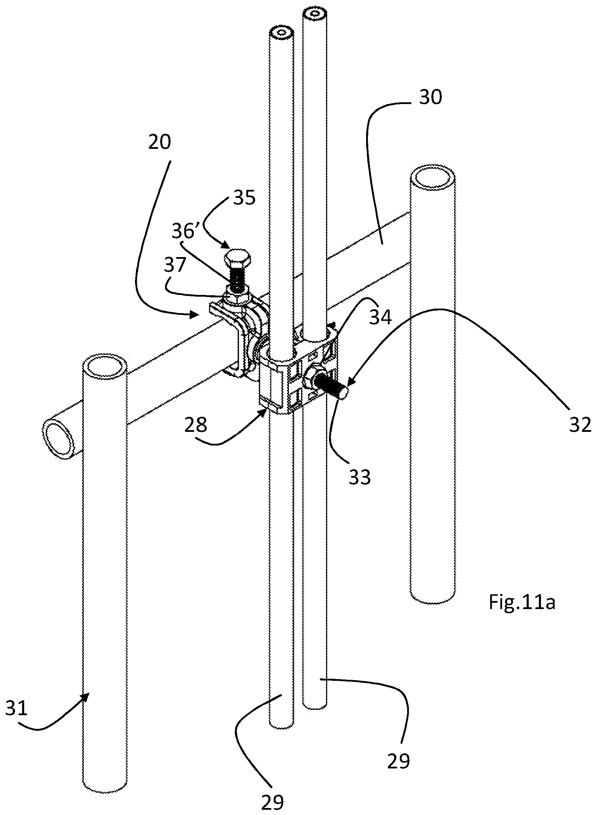

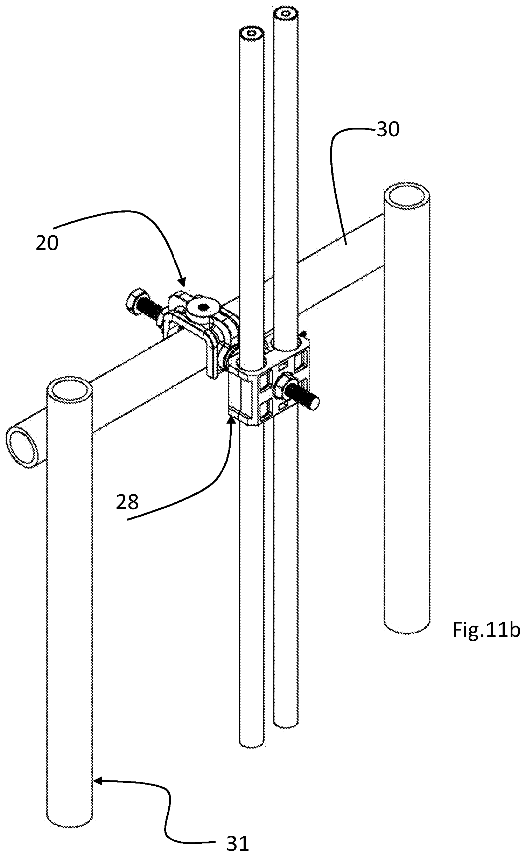

As is clearly illustrated in figures 11a and 11b of the drawings, the clamp 20 equipped with seats 28 (so-called saddles) for the passage of cables 29, is fixed to a support, for example a tubular supporting element or a tubular bar 30 of a pylon 31.

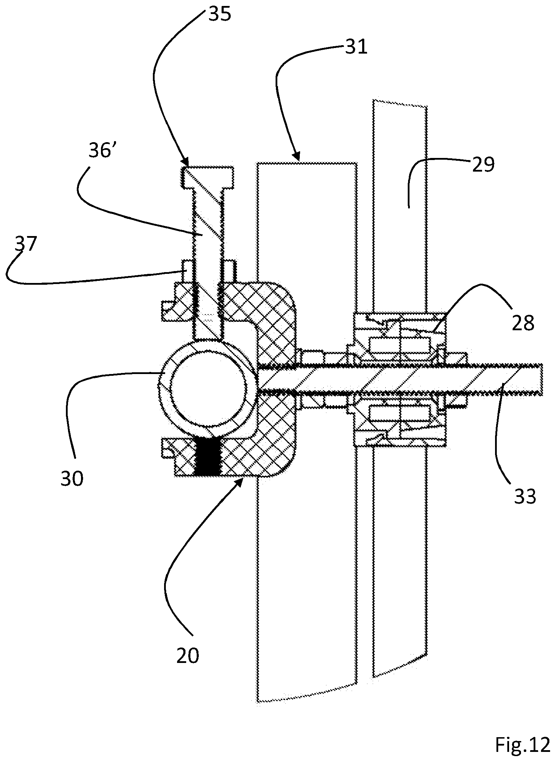

The seats 28 for cables 29 can be fixed either to one of the wings 21, 22 of the clamp as shown in Figure 11b, or to the core 23, as in the example of Figures 11a, 12.

As illustrated in Figure 11a, the fixing of the seats/saddles 28 is effected by means of a bolt (threaded bar/nut) 32 passing through the threaded hole 26 of the core 23. The threaded bar is indicated with 33 and the nut with 34.

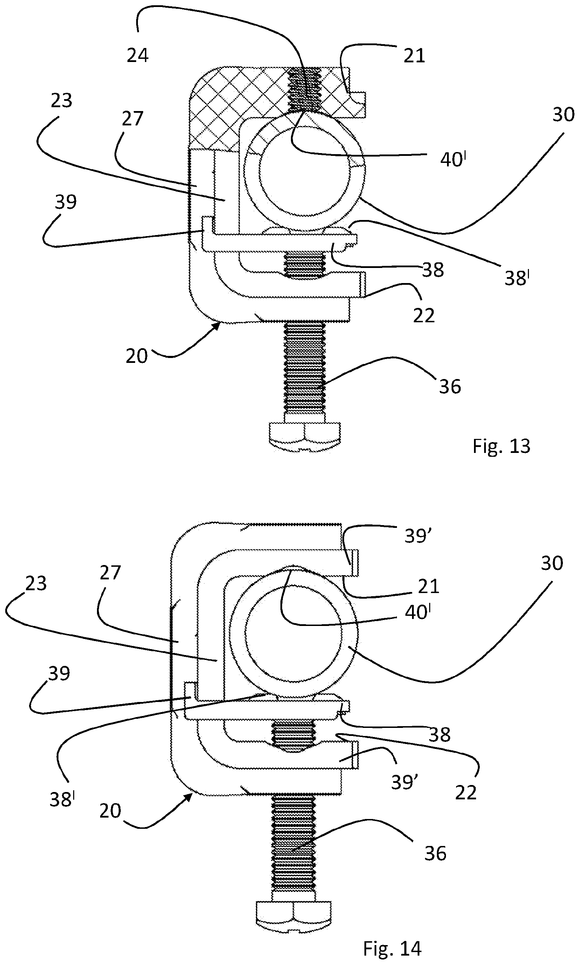

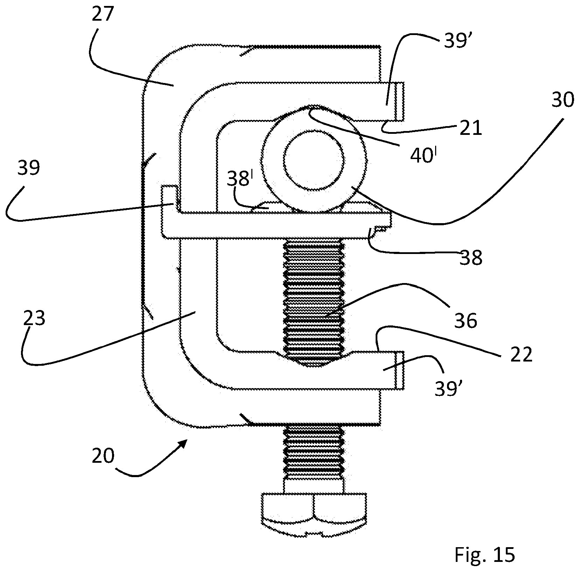

As shown in Figures 13-17, according to a preferred embodiment of the present invention, the clamp 20 is fixed to the tubular supporting element or tubular bar 30 by means of a screw 36 passing through the threaded hole 24 of the wing 21 or through the hole threaded 25 of the wing 22.

As illustrated in figures 11a, 11b and 12, according to a further embodiment, the screw 36 can be substituted by a bolt (screw/nut) 35. The screw is indicated with 36^{I} and the nut with 37.

A thrust plate 38 cooperates with the screw 36, 36^{I}, which is movable on the sides of the core 23 by means of guides 39.

Said guides 39 are produced in the form of peripheral hooks, provided projecting on one side of said thrust plate 38, and sliding on rails 39' provided on said core 23.

As illustrated in the figures, said rails 39' can also be provided on the edges of said wings 21, 22, favouring the insertion of the plate 38 between said wings 21, 22.

Said thrust plate 38 cooperates with the opposing wing 21 or 22 of the clamp 20 for tightening the same clamp 20 on bars 30 having a circular cross section, as it is possible to provide bars having different diameters (Figures 13-17).

With reference to the figures, a clamp 20 such as that previously described is provided, on the wing 21 and/or 22 opposed to the thrust plate 38, of at least one groove 40.

As illustrated in Figures 1-4, said groove 40 is provided on only one of the two wings 21 or 22 of the clamp 20.

According to a preferred embodiment, said groove 40 is provided on both of the wings 21 and 22 of the clamp 20.

In this embodiment, the clamp 20 has opposed grooves 40 on the wings 21 and 22 respectively.

As can be clearly seen from the drawings, said groove 40 extends longitudinally with respect to the wing 21 and/or 22 in the same direction as the tubular bar 30 and lies on a plane P2 perpendicular to the plane P1 on which the axes X, X' of the holes 24,25 and 26, lie.

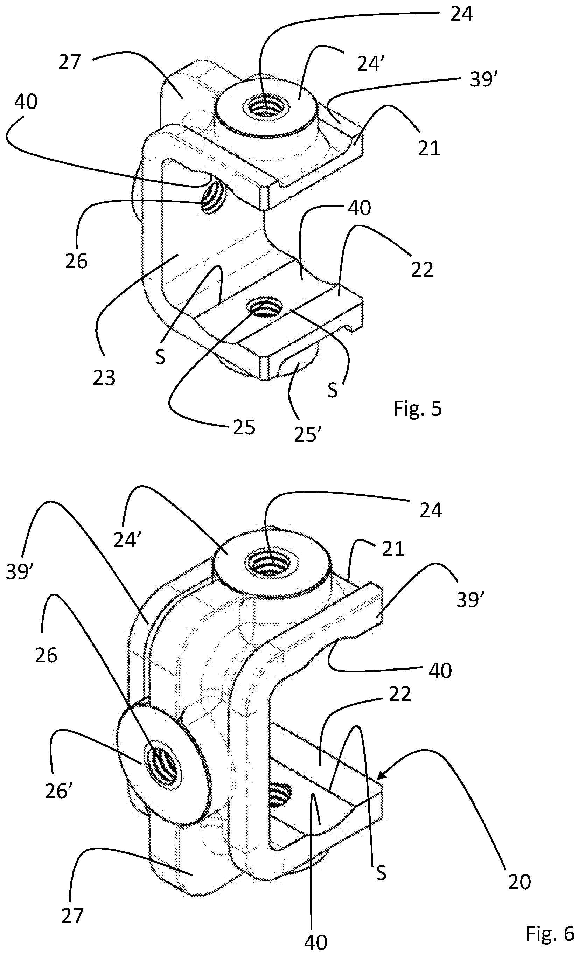

As shown in figures 1, 2, 5, 6 and 13, the groove 40 has a single arched section on one or both of the wings 21 and 22 of the clamp 20.

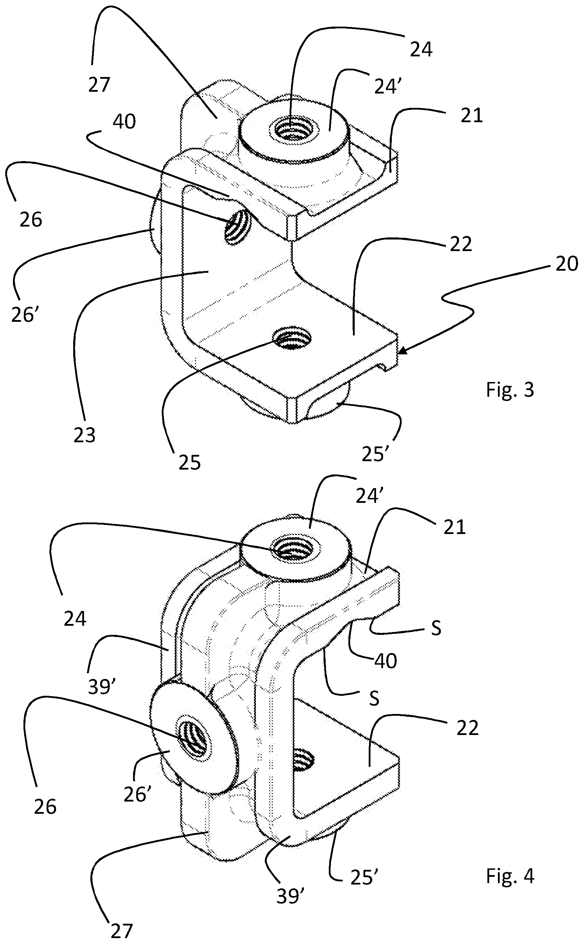

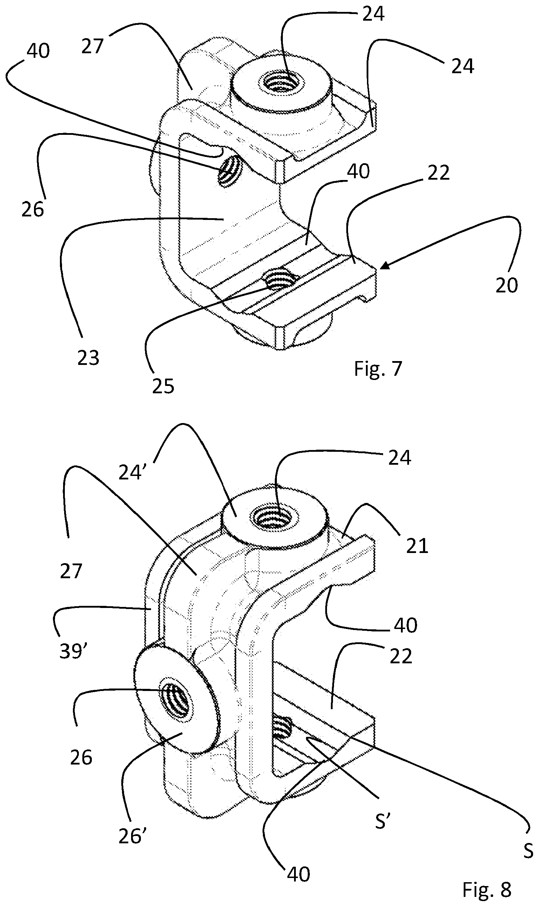

As illustrated in Figures 3, 4, 7, 8, 14 - 17, according to a further embodiment, each groove 40 has, on one or both of the wings 21 and 22 of the clamp 20, at least two arched sections with a different curvature radius.

Said groove 40 has different sections, in particular at least two different sections so that the clamp can adapt to tubular bars 30 having different diameters.

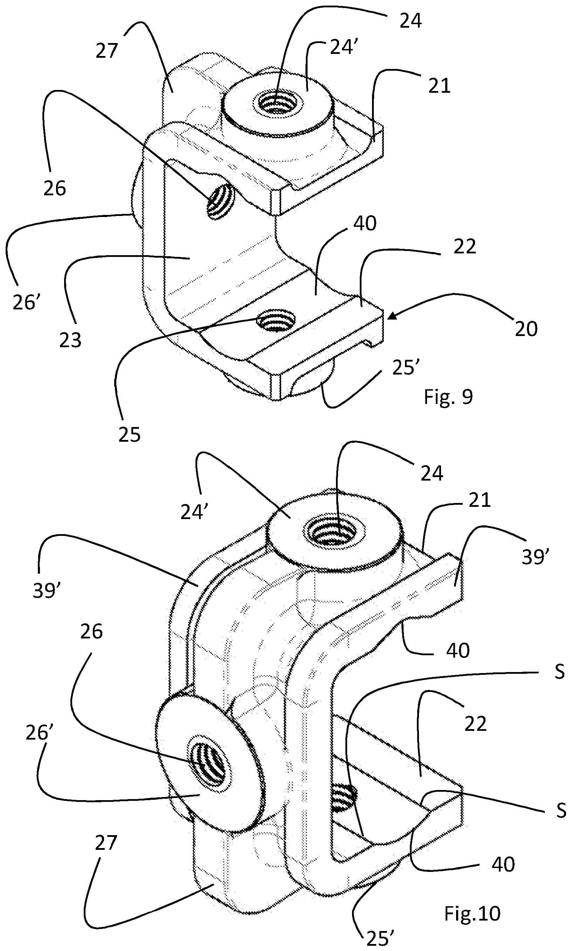

According to a further embodiment, as shown in Figures 9 and 10 it is possible to provide that one of the two wings has a groove 40 with a single section and that the opposed wing is provided with a groove 40 with at least two sections different from each other.

In one embodiment, the clamp 20 has a groove 40 on one or both of the wings 21 and 22 of said clamp 20, with a single arched section.

In a further embodiment, the clamp 20 has a groove 40 on one or both of the wings 21 and 22 of said clamp 20, each with two arched sections with a different curvature radius.

In a further embodiment, the clamp 20 has a groove 40 on both of the wings 21 and 22 of said clamp 20, one groove 40 having a single section and the other groove 40 having two arched sections with a different curvature radius.

Said grooves 40 form a housing seat for tubular bars 30 which can have different diameters.

The groove 40 with a double section, for example, can have a curvature radius of 15 mm and a curvature radius of 4 mm so as to be able to house tubular bars 30 between the wings 21, 22, with a diameter ranging from about 8 to 26 mm.

As can be clearly seen in Figures 13-15, there is an arc 40^{I} in said groove 40, having the circumference of the tubular bar 30, which creates a positive engagement of the clamp 20 on the tubular bar 30 itself.

Said groove (s) 40 in fact form longitudinal edges S, S^{I} which act against the tubular bar 30 when the thrust plate 38 is clamped on the tubular bar 30 itself.

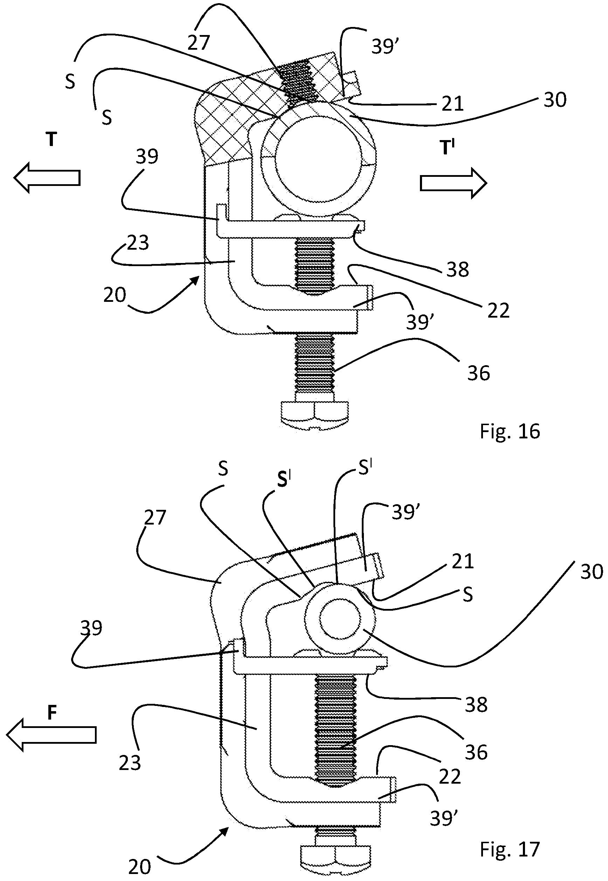

Figure 16 shows, for example, in a sectional view, the edges S in contact with the tubular bar 30.

In a preferred embodiment said groove 40 extends longitudinally and in a median position of the wing 21 and/or 22.

The clamp 20 therefore guarantees a stable clamping of the tubular bar 30, whatever its size, thanks to the presence of grooves 40 with different arched sections; said grooves 40, form longitudinal edges S, S^{I}, which keep the bar tubular 30 engaged between the wings 21, 22 of the clamp 20, without the risk of lateral sliding in both of the directions T, T^{I}, perpendicular to the length of the tubular bar 30 and without requiring excessive tightening of the thrust plate 38, which could cause breakage of the clamp 20 itself.

As shown in the figures, said thrust plate 38 can have on its surface in contact with the tubular bar 30, teeth 38^{I} for engaging the casing surface of said tubular bar 30, which prevent the slipping/disengagement of the tubular bar 30 itself from the clamp 20.

As illustrated in Figure 17, in fact, if the clamp 20 is stressed by a force F which tends to disengage it from the tubular bar 30, for this to happen, the force must be such as to open out the wing 21 with the consequent breakage of the clamp 20 itself.

According to the present invention, the clamp 20 is made of plastic material reinforced with glass fibers.

From what has been described above with reference to the figures, it is evident that a clamp 20 according to the present invention is particularly useful and advantageous.

The objectives mentioned in the preamble of the description have thus been achieved.

In particular, the plastic clamp charged with glass fibers has a resistance comparable to that of metal clamps; the plastic clamp charged with glass fibers is sturdy and durable; the presence of the grooves 40 ensures a secure grip of the bar without applying excessive force on the thrust plate 38 which could lead to breakage of the clamp 20 itself and/or to the lateral sliding of the tubular bar 30.

Furthermore, the clamp 20 is reinforced by the presence of the rib 27 and the collars 24', 25', 26'.

The clamp 20 for mounting cables to a supporting element, according to the present invention, in fact, guarantees an easy and solid assembly on any type of a pylon segment, in particular a tubular segment.

The clamp 20 according to the present invention offers resistance guarantees similar to the known metal clamps but with the advantage of having a greater resistance to atmospheric agents and greater ease of assembly and disassembly, thanks to the fact that the material with which they are formed is not corroded.

Furthermore, the clamp 20 of the present invention can be easily produced in series.

The forms of the clamp 20 can naturally be different from those shown merely by way of non-limiting example in the drawings.

The protection scope of the invention is defined by the enclosed claims.

## Claims

1. A clamp (20) for mounting cables (29) to a tubular supporting element (30), said clamp (20) consisting of a jumper having a "C"-shaped cross-section with two opposing wings (21,22) interconnected by a core (23), wherein a movable thrust plate (38) is provided between said two opposing wings (21,22), and wherein said tubular supporting element (30) can be tightened between said thrust plate (38) and the wing (21,22) opposed to the same, wherein
at least one of said wings (21,22) opposing said thrust plate (38) is provided with a longitudinal groove (40) in which a portion of the casing of said tubular supporting element (30) can be engaged, wherein said clamp (20) is made of plastic material charged with glass fibers, **characterized in that** the wings (21,22) and the core (23) are provided with respective threaded pass-through holes (24,25,26).

2. The clamp (20) according to claim 1, **characterized in that** said groove (40) has a single arched section which forms a housing seat for the tubular supporting element (30).

3. The clamp (20) according to claim 1, **characterized in that** said groove (40) has at least two arched sections with a different curvature radius so that the clamp (20) can be adapted for tightening on tubular supporting elements (30) having different diameters.

4. The clamp (20) according to one or more of the previous claims, **characterized in that** said groove or grooves (40) form longitudinal edges (S,S^{I}) that act against the tubular supporting elements (30) when the thrust plate (38) is tightened on said tubular supporting element (30).

5. The clamp (20) according to one or more of the previous claims, **characterized in that** said groove (40) is the seat of an arc (40^{I}) of the circumference of the tubular supporting element (30), said seat blocking said clamp (20) on said tubular supporting element (30).

6. The clamp (20) according to claim 1, **characterized in that** each of said threaded pass-through holes (24,25 and 26) is formed within respective collars (24',25',26') produced integrally with said wings (21,22) and said core (23) and externally to the same, said collars (24',25',26') being rigidly interconnected by an external reinforcement rib (27).

7. The clamp (20) according to claim 6, **characterized in that** the axes (X, X') of said pass-through holes (24,25,26) lie on the same median plane (P1) as the clamp (20) and are interconnected by an external reinforcement rib (27), said rib (27) also lies on said median plane (P1) of the clamp (20).

8. The clamp (20) according to one or more of the previous claims , **characterized in that** said groove (40) extends longitudinally with respect to the wing (21) and/or the opposing wing (22) in the same direction as the tubular supporting element (30) and lies on a plane (P2) perpendicular to the plane (P1) on which the axes (X) of said pass-through holes (24,25,26) lie.

9. The clamp (20) according to one or more of the previous claims, **characterized in that** said thrust plate (38) can be translated on the sides of the core (23) by means of guides (39), the movement of said thrust plate (38) being adjustable by means of a screw (36) which passes through the threaded hole (24) of the wing (21) or through the threaded hole (25) of the opposing wing (22).

10. The clamp (20) according to claim 9, **characterized in that** said guides (39) are produced in the form of peripheral hooks, provided projecting on one side of said thrust plate (38), and sliding on rails (39') provided on said core (23) or on said core (23) and said wings (21, 22).

11. The clamp (20) according to one or more of the previous claims, **characterized in that** said thrust plate (38) has, on its surface in contact with said tubular supporting element (30), teeth (38^{I}) for engaging on the casing surface of said tubular supporting element (30) which prevent the side disengagement/sliding of said tubular supporting element (30) from the clamp (20).

12. The clamp (20) according to one or more of the previous claims, **characterized in that** said clamp (20) is equipped with seats (28), so-called saddles, for the passage of cables (29), said seats (28) being fixed to one of the wings (21,22) or to the core (23) by means of a bolt (32) whose screw (33) passes through the threaded hole (26) of the core (23) or by means of a bolt (35) whose screw (36) passes through the threaded hole (24) of the wing (21) or through the threaded hole (25) of the opposing wing (22).

## Patentansprüche

1. Klemme (20) zum Befestigen von Kabeln (29) an einem rohrförmigen Trägerelement (30), wobei die Klemme (20) aus einer Brücke besteht, die einen "C"-förmigen Querschnitt mit zwei gegenüberliegenden Flügeln (21, 22) aufweist, die durch einen Kern (23) miteinander verbunden sind, wobei eine bewegliche Druckplatte (38) zwischen den beiden gegenüberliegenden Flügeln (21, 22) vorgesehen ist, und wobei das rohrförmige Trägerelement (30) zwischen der Druckplatte (38) und dem dieser gegenüberliegenden Flügel (21, 22) festgezogen werden kann, wobei mindestens einer der der Druckplatte (38) gegenüberliegenden Flügel (21, 22) mit einer Längsnut (40) versehen ist, mit der ein Teil des Gehäuses des rohrförmigen Trägerelements (30) in Eingriff treten kann, wobei die Klemme (20) aus einem mit Glasfasern beladenen Kunststoffmaterial hergestellt ist, **dadurch gekennzeichnet, dass** die Flügel (21, 22) und der Kern (23) mit entsprechenden Gewindedurchgangslöchern (24, 25, 26) versehen sind.

2. Klemme (20) nach Anspruch 1, **dadurch gekennzeichnet, dass** die Nut (40) einen einzigen bogenförmigen Abschnitt aufweist, der einen Gehäusesitz für das rohrförmige Trägerelement (30) bildet.

3. Klemme (20) nach Anspruch 1, **dadurch gekennzeichnet, dass** die Nut (40) mindestens zwei bogenförmige Abschnitte mit unterschiedlichem Krümmungsradius aufweist, so dass die Klemme (20) zum Festziehen an rohrförmigen Trägerelementen (30) mit unterschiedlichen Durchmessern angepasst werden kann.

4. Klemme (20) nach einem der vorhergehenden Ansprüche, **dadurch gekennzeichnet, dass** die Nut oder Nuten (40) Längskanten (S, S^{I}) bilden, die gegen die rohrförmigen Trägerelemente (30) wirken, wenn die Druckplatte (38) auf dem rohrförmigen Trägerelement (30) festgezogen wird.

5. Klemme (20) nach einem der vorhergehenden Ansprüche, **dadurch gekennzeichnet, dass** die Nut (40) der Sitz eines Bogens (40^{I}) des Umfangs des rohrförmigen Trägerelements (30) ist, wobei der Sitz die Klemme (20) an dem rohrförmigen Trägerelement (30) blockiert.

6. Klemme (20) nach Anspruch 1, **dadurch gekennzeichnet, dass** jedes der Gewindedurchgangslöcher (24, 25 und 26) in entsprechenden Kragen (24', 25', 26') ausgebildet ist, die einstückig mit den Flügeln (21, 22) und dem Kern (23) und außerhalb desselben hergestellt sind, wobei die Kragen (24', 25', 26') durch eine äußere Verstärkungsrippe (27) starr miteinander verbunden sind.

7. Klemme (20) nach Anspruch 6, **dadurch gekennzeichnet, dass** die Achsen (X, X') der Durchgangslöcher (24, 25, 26) auf der gleichen Mittelebene (P1) wie die Klemme (20) liegen und durch eine äußere Verstärkungsrippe (27) miteinander verbunden sind, wobei die Rippe (27) ebenfalls auf der Mittelebene (P1) der Klemme (20) liegt.

8. Klemme (20) nach einem der vorhergehenden Ansprüche, **dadurch gekennzeichnet, dass** sich die Nut (40) in Längsrichtung des Flügels (21) und/oder des gegenüberliegenden Flügels (22) in der gleichen Richtung wie das rohrförmige Trägerelement (30) erstreckt und auf einer Ebene (P2) liegt, die senkrecht zu der Ebene (P1) ist, auf der die Achsen (X) der Durchgangslöcher (24, 25, 26) liegen.

9. Klemme (20) nach einem der vorhergehenden Ansprüche, **dadurch gekennzeichnet, dass** die Druckplatte (38) an den Seiten des Kerns (23) mit Hilfe von Führungen (39) verschoben werden kann, wobei die Bewegung der Druckplatte (38) mit Hilfe einer Schraube (36) einstellbar ist, die durch das Gewindeloch (24) des Flügels (21) oder durch das Gewindeloch (25) des gegenüberliegenden Flügels (22) verläuft.

10. Klemme (20) nach Anspruch 9, **dadurch gekennzeichnet, dass** die Führungen (39) in Form von Umfangshaken ausgeführt sind, die auf einer Seite der Druckplatte (38) hervorstehend vorgesehen sind und auf Schienen (39') gleiten, die an dem Kern (23) oder an dem Kern (23) und den Flügeln (21, 22) vorgesehen sind.

11. Klemme (20) nach einem der vorhergehenden Ansprüche, **dadurch gekennzeichnet, dass** die Druckplatte (38) auf ihrer mit dem rohrförmigen Trägerelement (30) in Kontakt stehenden Oberfläche Zähne (38^{I}) zum Eingriff mit der Mantelfläche des rohrförmigen Trägerelements (30) aufweist, die das seitliche Lösen/Gleiten des rohrförmigen Trägerelements (30) von der Klemme (20) verhindern.

12. Klemme (20) nach einem der vorhergehenden Ansprüche, **dadurch gekennzeichnet, dass** die Klemme (20) mit Sitzen (28), sogenannten Sätteln, für den Durchgang von Kabeln (29) ausgestattet ist, wobei die Sitze (28) an einem der Flügel (21, 22) oder am Kern (23) mittels eines Bolzens (32), dessen Schraube (33) durch das Gewindeloch (26) des Kerns (23) verläuft, oder mittels eines Bolzens (35) befestigt sind, dessen Schraube (36) durch das Gewindeloch (24) des Flügels (21) oder durch das Gewindeloch (25) des gegenüberliegenden Flügels (22) verläuft.

## Revendications

1. Pince (20) permettant de monter des câbles (29) sur un élément support tubulaire (30), ladite pince (20) étant constituée d'un cavalier comportant une section transversale en forme de « C » avec deux ailes opposées (21,22) reliées entre elles par un noyau (23), une plaque de poussée mobile (38) étant pourvue entre lesdites deux ailes opposées (21,22), et ledit élément support tubulaire (30) pouvant être serré entre ladite plaque de poussée (38) et l'aile (21,22) opposée à celle-ci,
au moins l'une desdites ailes (21,22) opposées à ladite plaque de poussée (38) étant pourvue d'une rainure longitudinale (40) dans laquelle une partie du boîtier dudit élément support tubulaire (30) peut être insérée,
ladite pince (20) étant constituée d'une matière plastique chargée de fibres de verre, **caractérisée en ce que** les ailes (21,22) et le noyau (23) sont pourvus de trous traversants filetés respectifs (24,25,26).

2. Pince (20) selon la revendication 1, **caractérisée en ce que** ladite rainure (40) comporte une seule section arquée qui forme un siège de logement pour l'élément support tubulaire (30).

3. Pince (20) selon la revendication 1, **caractérisée en ce que** ladite rainure (40) comporte au moins deux sections arquées avec un rayon de courbure différent de sorte que la pince (20) puisse être adaptée au serrage sur des éléments supports tubulaires (30) comportant des diamètres différents.

4. Pince (20) selon l'une ou plusieurs des revendications précédentes, **caractérisée en ce que** ladite ou lesdites rainures (40) forment des bords longitudinaux (S, S^{I}) qui agissent contre les éléments supports tubulaires (30) lorsque la plaque de poussée (38) est serrée sur ledit élément support tubulaire (30).

5. Pince (20) selon l'une ou plusieurs des revendications précédentes, **caractérisée en ce que** ladite rainure (40) est le siège d'un arc (40^{I}) de la circonférence de l'élément support tubulaire (30), ledit siège bloquant ladite pince (20) sur ledit élément support tubulaire (30).

6. Pince (20) selon la revendication 1, **caractérisée en ce que** chacun desdits trous traversants filetés (24,25 et 26) est formé à l'intérieur de colliers respectifs (24', 25', 26') réalisés d'un seul tenant avec lesdites ailes (21,22) et ledit noyau (23) et extérieurement à ceux-ci, lesdits colliers (24',25',26') étant reliés entre eux de manière rigide par une nervure de renforcement externe (27).

7. Pince (20) selon la revendication 6, **caractérisée en ce que** les axes (X, X') desdits trous traversants (24,25,26) reposent sur le même plan médian (P1) que la pince (20) et sont reliés entre eux par une nervure de renforcement externe (27), ladite nervure (27) reposant également sur ledit plan médian (P1) de la pince (20).

8. Pince (20) selon l'une ou plusieurs des revendications précédentes, **caractérisée en ce que** ladite rainure (40) s'étend longitudinalement par rapport à l'aile (21) et/ou à l'aile opposée (22) dans la même direction que l'élément support tubulaire (30) et repose sur un plan (P2) perpendiculaire au plan (P1) sur lequel reposent les axes (X) desdits trous traversants (24,25,26).

9. Pince (20) selon l'une ou plusieurs des revendications précédentes, **caractérisée en ce que** ladite plaque de poussée (38) peut être translatée sur les côtés du noyau (23) au moyen de guides (39), le déplacement de ladite plaque de poussée (38) étant réglable au moyen d'une vis (36) qui passe à travers le trou fileté (24) de l'aile (21) ou à travers le trou fileté (25) de l'aile opposée (22).

10. Pince (20) selon la revendication 9, **caractérisée en ce que** lesdits guides (39) sont produits sous la forme de crochets périphériques, pourvus en faisant saillie d'un côté de ladite plaque de poussée (38), et coulissant sur des rails (39') pourvus sur ledit noyau (23) ou sur ledit noyau (23) et lesdites ailes (21, 22).

11. Pince (20) selon l'une ou plusieurs des revendications précédentes, **caractérisée en ce que** ladite plaque de poussée (38) comporte, sur sa surface en contact avec ledit élément support tubulaire (30), des dents (38^{I}) destinées à se mettre en prise sur la surface du boîtier dudit élément support tubulaire (30) qui empêchent le désengagement/glissement latéral dudit élément support tubulaire (30) de la pince (20).

12. Pince (20) selon l'une ou plusieurs des revendications précédentes, **caractérisée en ce que** ladite pince (20) est équipée de sièges (28), appelés selles, destinés au passage de câbles (29), lesdits sièges (28) étant fixés à l'une des ailes (21,22) ou au noyau (23) au moyen d'un boulon (32) dont la vis (33) passe à travers le trou fileté (26) du noyau (23) ou au moyen d'un boulon (35) dont la vis (36) passe à travers le trou fileté (24) de l'aile (21) ou à travers le trou fileté (25) de l'aile opposée (22).
